# EUROPEAN PATENT SPECIFICATION

(11) **EP 3 465 852 B1**
(45) Date of publication and mention of the grant of the patent: **25.11.2020**
(21) Application number: 17787049.0
(22) Date of filing: 30.05.2017
(51) Int. Cl.: H02G 1/08

(54) **PULLING ARRANGEMENT, AND METHOD FOR PULLING OF CABLES**
ZIEHANORDNUNG UND VERFAHREN ZUM ZIEHEN VON KABELN
DISPOSITIF DE TRACTION ET PROCÉDÉ DE TRACTION DE CÂBLES

(30) Priority: 30.05.2016 NO 20160929
(43) Date of publication of application: 10.04.2019
(73) Proprietor: Los Elektro AS, 5430 Bremnes (NO)
(72) Inventor: HÅVIK, Øystein, 5427 Urangsvåg (NO); SÆRSTEN, Per Oddmund, 5360 Koltveit (NO)
(74) Representative: Acapo AS
(86) International application number: PCT/NO2017/000017
(87) International publication number: WO 2017/209619

(56) References cited:
- WO-A1-98/02638
- CA-A1- 2 940 877
- DE-C- 822 264
- DE-U1-202005 006 000
- US-A- 1 620 788

## Description

### Area of the invention

The present invention relates to a cable or pulling arrangement for pulling cables through a borehole and also a method for the pulling of cables through a borehole.

### Background of the invention.

High voltage cables are normally held in stretches in the air over a land formation or in ditches in the ground. However, there has been a growing need to lay such cables in boreholes in rock formations or in the ground and soil. How to drill holes for laying cables is known, but the equipment presently available does not allow for pulling cables through long boreholes. For example, it is desirable to be able to pull such cables through boreholes which are several hundred metres long and also several kilometres long.

In order to pull such cables through long boreholes, it is important that the friction between the cable bundle and the interior of the borehole is low. Furthermore, in many cases it will also be important that the cables are in an ordered cable bundle.

It is further preferred that the pulling forces can be transferred uniformly to the cable. Document CA2940877 discloses a method for laying a cable into a pipe by means of rolling elements. Document DE202005006000 discloses a pulling device for pulling through electric wiring installations in a building.

### Purpose of the present invention.

Thus, it is an aim of the present invention to provide an arrangement and a method for pulling heavy elongated cables, such as high-voltage cables, through a long borehole.

It is an aim of the present invention to uniformly transfer the forces arising with the pulling of the cable over the entire length of the cable. It is a further aim of the invention that the cables do not rub against the surface (such as the inner surfaces of the borehole) when being pulled.

It is a further aim of the invention to provide a stable cable arrangement which prevents damage to the cable, and which permits extraction in elongated boreholes.

When pulling cables through long boreholes, including horizontal, inclined, arched or vertical boreholes, friction forces arise between the cable bundle and the inside of the borehole. To date, these frictional forces have made it impossible to be able to pull cables through long boreholes without incurring damage to the cables. Furthermore, there may also be a need to lay the cables in ordered bundle, for example, when one-wire high voltage cables are laid in a three foil arrangement. Therefore, it is an aim of the invention to provide a pulling arrangement which connects a number of clamps via coupling elements, and where the clamps bundle together a number of cables. It is a further aim of the invention that the coupling elements or clamps are directly or indirectly equipped with friction reducing means.

When pulling cables through long boreholes or through boreholes with a steep incline, the forces can be so large in the cables that they are overloaded if the pull is directly on the cable. Therefore, clamps are described which can directly or indirectly be attached to the cable so that parts of the pulling forces will pass through the clamps, i.e. so that in practice one exerts forces at several points along the elongated length of the cables. Preferably the clamps are evenly distributed along the longitudinal direction of the cable bundle and connected via a number of coupling elements.

It is an aim of the invention to provide a pulling arrangement which enables pulling cables through long boreholes. The system must therefore;
1. Include friction reducing means (such as wheels) between clamps and/or coupling elements and the borehole inner surface, for transport of the cables into (and out of) the borehole
2. To avoid damaging the cable outer sheath when pulling.
3. Bundling of cable, such as three-foil. E.g. for a one-wire voltage cable it is important that they are in a three-foil arrangement to reduce the power loss.
4. Securing the cable set in the event of short circuiting. The system keeps the cables in position in the event of a short circuit in the cable set.
5. Be able to withdraw the cable set in the event of a system fault or renewal/upgrade of the installation.
6. Coupling element, preferably consisting of rails (mechanical reinforcement) used when the forces during pulling or the operational phase become too large for the cables to be exclusively present in the clamps. Wheels are mounted on the rails to reduce friction during pulling. When using rails (coupling element) the clamps will be anchored to the rail.

### Summary of the Invention

Thus, the present invention relates in a first aspect to a pulling arrangement or cable arrangement for the pulling of a cable or cable bundle through a borehole, characterised in that the pulling arrangement is comprised of;
- a number of clamp devices attached to the cable bundle in several positions in the longitudinal direction of the cable bundle,
- one or more coupling elements that connect two or more clamp devices in the longitudinal direction of the cable bundle,
- and that the pulling forces that are used for the pulling of the cable arrangement through the borehole are applied by at least one of said coupling elements, and transferred via said clamps to the cable bundle.

The arrangement also comprises a pulling head for pulling of the cable bundle, where the pulling head is comprised of a number of fasteners which can be attached to, and engage with, said coupling elements.

Radially arranged on the exterior of the said coupling elements and/or clamps, there is a number of friction-reducing means to reduce the friction between the pulling arrangement and the inner surface of the borehole when pulling through the borehole.

Said clamps comprise the means for fastening to the cable bundle and fastening means for attachment to the coupling elements.

In one embodiment, said clamps comprise openings or grooves for the uptake of the coupling elements that are placed crossways in relation to the clamps.

In one embodiment, as the coupling element is being secured to the clamps and cable bundle, the coupling elements width stretches mainly radially outwards from the longitudinal axis of the cable bundle.

In one embodiment, said friction reducing means comprises a number of wheels, and where the centre axis of said wheel is embedded in the coupling element.

In one embodiment, the arrangement comprises three cables and the clamps are adapted for receiving three cables, and that the arrangement comprises three coupling elements.

In one embodiment, said clamps have a triangular shape and comprise three contact surfaces which, with by the constriction of the clamp, engage the three cables of the cable bundle, and that said clamp comprises three fastening means for attachment to the three coupling elements of each clamp.

In one embodiment, the arrangement includes a load cell, set up for measuring forces which the cable bundle is subjected to when pulling through the borehole.

In one embodiment, the arrangement includes one or more accelerometers measuring acceleration in three planes, adapted to determine the position of the arrangement.

In one embodiment, the position of the cable arrangement is measured continually when pulling through the borehole so information from the accelerometers will provide coordinates of the elongated length of the borehole.

In one embodiment, the arrangement includes image recording means such as a camera, and lighting equipment such as a headlight adapted to take photographs and/or video of the inner surface of the borehole.

In one embodiment, the arrangement includes one or more fibre cables, and that this/these are used for transmitting signals from the arrangement in the borehole to a data processing unit outside the borehole.

In one embodiment, said fibre cable signals are transferred from the load unit, accelerometers, and/or image recording means.

In one embodiment, said load unit, accelerometers, and/or image recording means are arranged in said pulling head.

In a second aspect, the present invention relates to a method for pulling a cable bundle through an elongated borehole, characterised in that a number of cables are bundled together to form a cable bundle with a number of clamps, and that a number of coupling elements are attached to said clamps in the longitudinal length of the cable bundle, and that pulling forces are applied on the one end part of the cable arrangement when pulling the cable bundle through a borehole.

In one embodiment, the arrangement includes a pulling head that attaches to the coupling elements for pulling the cable bundle through the borehole.

In one embodiment, pulling forces are applied via coupling elements to the clamps and to the cable bundle for the pulling of the cable bundle through the borehole.

In one embodiment, pulling forces are also applied directly to the cable bundle.

In one embodiment, pulling forces are transferred via coupling elements and clamps to a number of contact points along the elongated length of the cable bundle.

In one embodiment, a pulling head is applied and this is attached to the coupling elements.

In one embodiment, friction between the arrangement and the borehole inner surface is reduced by a number of friction-reducing means.

In one embodiment, the arrangement includes a load cell and the forces which the cable bundles are subjected to by pulling through borehole are measured.

In one embodiment, the arrangement includes one or more accelerometers and acceleration is measured in three planes, arranged to determine the location of the arrangement.

In one embodiment, the arrangement includes image recording means such as a camera, and lighting equipment such as a headlight and that images and/or videos of the inner surface of the borehole are recorded.

In one embodiment, the arrangement includes one or more fibre cables, and that these are used for transmitting signals from the arrangement in the borehole to a data processing unit outside the borehole.

### Description of the figures

Preferred embodiments of the invention shall be described in more detail here with reference to the accompanying figures, where:
Figure 1 shows schematically in perspective a cable arrangement according to the invention comprising of a number of cables, clamps for fastening to the cables and coupling elements to connect the clamps.
Figure 2 shows schematically in perspective an alternative embodiment of a cable arrangement.
Figure 3 shows schematically in perspective a pulling head and how this is adapted to be attached to the coupling elements in a cable arrangement.
Figure 4 shows in perspective an embodiment of a clamp which can be used in the invention.
Figure 5 shows a cross section of another embodiment of a clamp, and how a number of coupling elements is fastened to this.

### Description of preferred embodiments of the invention.

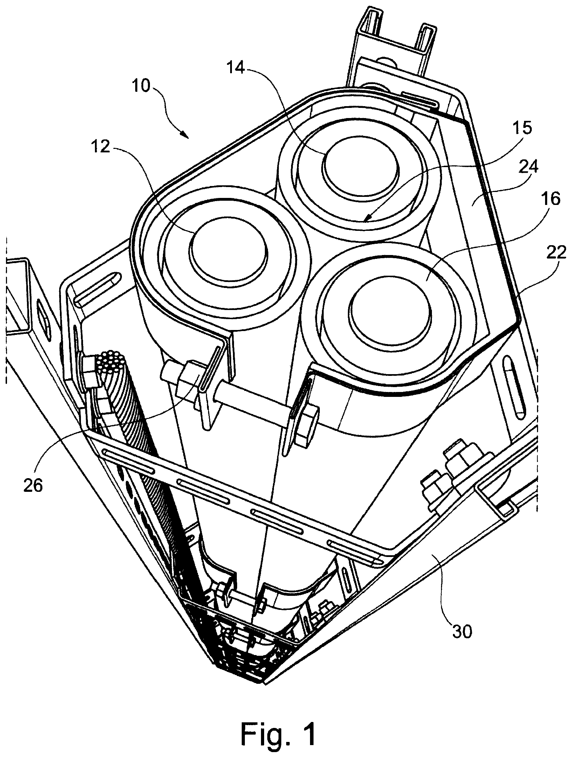

Figure 1 shows a pulling arrangement 10 for pulling one or more cables through a borehole 11. There are major challenges with the pulling of heavy and very long cables through boreholes that may be many kilometres long. A huge amount of friction arises between the cable arrangement and the inner surface of the borehole, and it takes extremely great forces to pull the cable through. The aim of the invention is therefore to reduce the friction between the cable arrangement and the borehole, and also to apply pulling forces to the cable such that these have a more uniform distribution throughout the length of the cable.

The pulling arrangement or cable arrangement 10 shown in figure 1 comprises a number of cables 12,14,16, bundled together in a cable bundle 15. The cable bundle 15 is held together by a number of clamps 20, which can be functionally designed in different ways. It is essential that they hold the cables 12, 14, 16 in place and that they are sufficiently secured to the cables so that the pulling forces can be transferred via the clamps 20 to the cable bundle 15.

It is preferred that the clamps 20 consist of a clamping device 22 and one or more insertion elements 24, but it is not a prerequisite. Moreover, any insertion elements 24 have a shape such that they can form a good engagement with the cable bundle 15. Often this insertion element is made of a more flexible material than the clamping device 22, and it is preferred that the insertion material is plastic or silicone rubber. The clamping device 22 is equipped with fasteners 26, preferably adjustable, for clamping together.

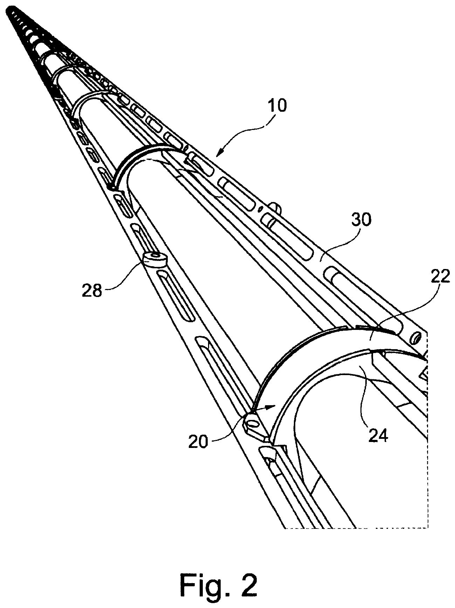

In the radial circumference of the clamps 20 there are fasteners 20c suitable for attachment to a number of coupling elements 30. In a preferred embodiment to each clamp 20 there are attached three coupling elements 30 (as shown in Figure 2). In other embodiments there is only one coupling element 30 attached to the clamps 20 and further embodiments have clamps 20 attached to two or four coupling elements 30, and in further embodiments there are five or more coupling elements 30 fastened to each clamp 20.

Preferably, each of the coupling elements 30 extend along the length of the whole of the cable bundle 15, but in some embodiments the cable bundle 15 is fitted in the longitudinal direction with several coupling elements 30. If the clamp 20 is adapted for attaching multiple coupling elements 30, then at least one of these may extend throughout the length of the whole of the cable bundle 15, while one or more of the remaining coupling elements 30 can be applied in only parts of the length, and also so that additional coupling elements in total cover the whole or large parts of the cable bundle 15, in the longitudinal direction.

The clamps 20 can be of any type that is fastened well to the cable bundle 15, so one in the pulling of the cable bundle 15 through a borehole 11 can apply pull forces to the coupling elements 30 and that these, via a number of clamps 20, transfer the pulling forces to the cable bundle 15 in anchor points of all the clamps 20 to the cable bundle 15. As mentioned, in the clamps 20 there are attachment ears 20c equipped for connecting a coupling element 30 to clamps 20. In a preferred embodiment, a clamp 20 is equipped with recesses 20e for receiving the corresponding longitudinal coupling elements 30. By such a joining of the coupling elements 30 in recesses 22e in the clamps 20, the stability of the cable arrangement 10 is improved. The clamps 20 and coupling elements 30, with the attachment of the clamps 20 to the cable bundle 15 provides a very stable cable arrangement 10, i.e. an arrangement 10 which is sufficiently stable such that very long cable bundles 15 can be pulled through an elongated borehole 11. The considerable forces that are used for pulling the cable bundle 15 through the borehole 11 can be applied directly to the cable bundle 15, or indirectly to the cable bundle 15 and the cables 12,14,16 via coupling elements 30 and clamps 20.

A sufficient number of clamps 20 across the length of the cable bundle 15 will prevent the cable bundle 15 from rubbing against the inner surfaces 11a of the borehole 11 when pulling through the borehole 11.

Although the purpose of the invention is to enable a pulling of heavy cable bundles 15 in a borehole 11, the arrangement 10 can, with an attachment of clamps 20 and coupling elements 30 also be used on lighter cable bundles 15 and also for solutions which will not be pulled through boreholes 11. The coupling elements 30 can, for example, be provided with means for attachment to other constructions, for instance, for suspension in pipelines, tunnels, etc.

In a particularly preferred embodiment the width of the coupling element 30 extends radially, with respect to the centre axis of the cable arrangement 10. Hence, the coupling element 30 is in the form of a rail with a length, width and height. The width is substantially larger, perhaps 1-10 multiples of the height. The rail-shaped coupling element 30 is arranged as edged (width extending radially outwards), and not flat on the circumference of the cable arrangement 10. This causes a significant stiffening in the cable arrangement 10.

It is preferable that the friction reducing means is in the form of wheels. When the width of the coupling elements is of a certain extension, the centre of the wheels 28 can be embedded in the coupling element 30. Thus, one can use the wheels 28 with a relatively large diameter as the centre of the wheels 28 are embedded in the rail, i.e. at a considerable distance from the radial outer periphery of the coupling element 30.

Furthermore, figure 1 shows a number of coupling elements 30 which couples together a number of clamps 20 in the longitudinal direction.

Essential to the arrangement 10 according to the invention is that the clamps 20, which are attached to the cable bundle 15 are held together by coupling elements 30 so that one pulls the cable bundle 15 by pulling the coupling elements 30.

Figure 2 shows schematically in perspective an alternative pulling arrangement 10 comprising a number of coupling elements 30 attached to clamps 20. In this embodiment there are coupling elements 30 that are equipped with friction reducing means 28. Moreover, this figure shows one embodiment of the clamp 20 composed of a clamp arrangement 22 and insertion elements 24.

It is also evident that the arrangement may include a fibre cable 29, preferably provided in the insertion element 24 and within the clamp element 22.

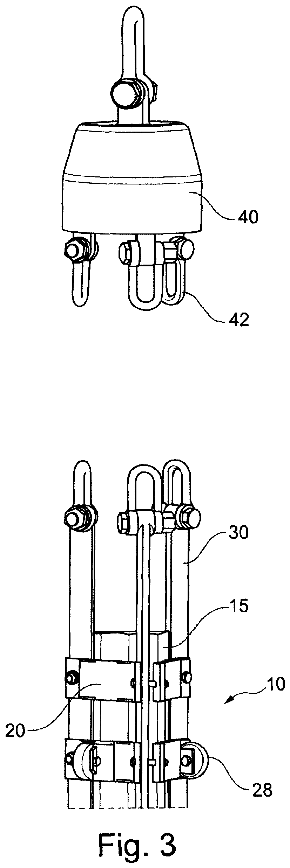

Figure 3 illustrates a pulling head 40 and how this is adapted to be able to pull the cable bundle 15 via the coupling elements 30. The coupling elements 30 are attached via clamps 20 to the cable bundle 15.

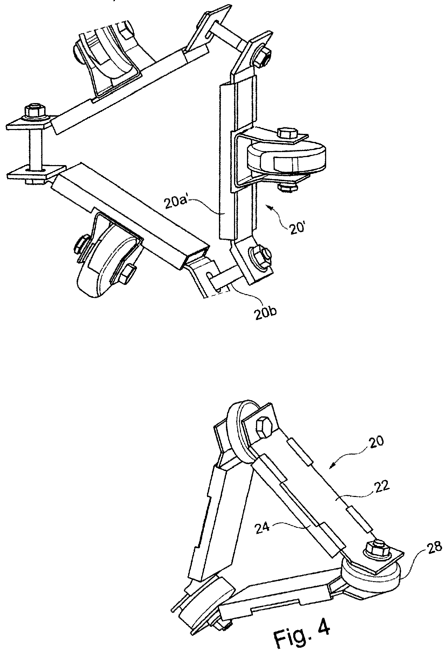

Figure 4 shows an example of an individual clamp 20. The clamp 20 which is shown in figure 4 has a triangular shape and is well suited for bundling together three cables 12, 14, 16. However, one can by the same principle create clamps 20 which are adapted to more or fewer cables. In order to establish a good grip/fastening for the cables (not shown in the figure), the clamp in the figure consists of two parts; an outer clamping arrangement 22 which adjustably can be clamped together about the cables, and insertion elements 24 which forms the very frictional engagement against the cables. It further appears that the clamp 20 of figure 4 is equipped with friction reducing means 28 for reducing friction between the arrangement 10 and the borehole 11. The securing means 20g for attaching one clamp 20 to multiple coupling elements 30 is also shown in figure 4. This clamp 20 corresponds to the clamps 20 which are also shown schematically in figure 1.

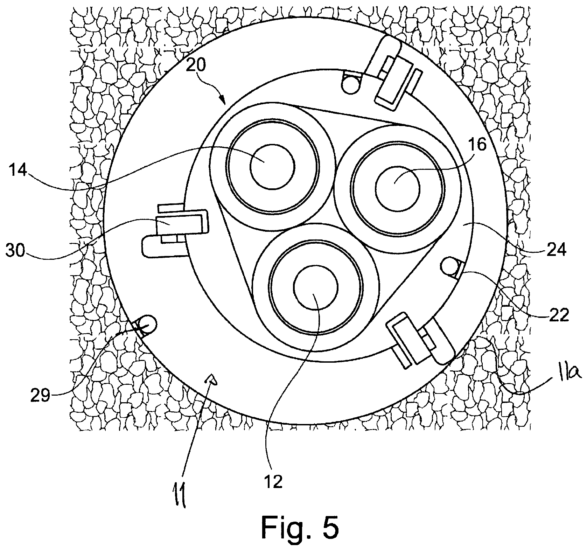

Figure 5 shows an embodiment of the clamp 20, equivalent to the embodiment also shown in figure 1. The cross-section shows a number of cables 12, 14, 16, held together by clamps 20. The clamps 20 are comprised of two elements in this embodiment, namely the clamp arrangement 22 and insertion element 24. The clamping arrangement 22 is attached to the coupling elements 30.

As indicated above, the pulling arrangement 10 is designed to be able to pull a cable bundle 15 through an elongated borehole 11. The pulling forces which are necessary to be able to pull the cables through the borehole 11 are uniformly distributed throughout the length of the cable as they are taken up by the longitudinal coupling elements 30 and the transverse clamps 20.

By pulling through an elongated borehole the front part of the cable arrangement 10 will move through the hole of the borehole from the entrance at the one end and out of the bore hole at the other end. It is therefore preferred to equip this front part, preferably in the form of a pulling head 40, with the means to measure different parameters and conditions.

In one embodiment, the pulling arrangement 10, preferably the cable head 40, provided with a load cell capable of measuring forces the cable bundle 15 is exposed to at any time when being pulled through the borehole 11. This will provide information about which forces the cable is subjected to, and also if these were to become large enough so that there is a risk of causing damage the cable.

In one embodiment, the pulling arrangement 10, preferably the cable head 40, is provided with one or more accelerometers and one can thus measure the acceleration in three planes. In this way one can easily determine the location of the arrangement, and would thus also determine how the borehole 11 extends through the rock formation.

In one embodiment, the pulling arrangement 10, preferably the cable head 40, is equipped with image recording means such as cameras, and lighting equipment such as a headlight to take images and/or videos of the inner surface (11a) of the borehole (11).

## Claims

1. Pulling arrangement (10) for the pulling of cables (12,14,16) or a cable bundle (15) through a borehole (11), comprising:
- a number of clamp devices (20) attached to the cable bundle (15) in various positions in the longitudinal direction of the cable bundle (15),
- one or more coupling elements (30) which connect two or more clamp devices (20) in the longitudinal direction of the cable bundle,
- arranged so that the pulling forces that are used to pull the cable arrangement (10) through the borehole (11) are applied via said at least one coupling element (30) and is transferred via said clamps (20) to the cable bundle (15),
- a pulling head (40) for pulling the cable bundle (15), where the pulling head (40) comprises a number of fastening means (42) that can be fastened to and form an engagement with said coupling elements (30),
- radially outside the said coupling elements (30) and/or on the clamps (20) are a number of friction reducing means (28) to reduce friction between the pulling arrangement (10) and the inner surface (11a) of the borehole (11) by pulling through the borehole (11), and
- wherein said clamp (20) comprises means (20a) for attachment to the cable bundle (15) and attachment means (20b) for attachment to the coupling elements (30).

2. Pulling arrangement according to claim 1, **characterised in that** the clamps are comprised of openings (20f) or cut-outs (20e) to receive the coupling units (30), placed transversely with respect to the clamps (20).

3. Pulling arrangement according to claim 1, where the coupling elements (30) comprise friction reducing means (28), and where the width of the coupling elements (30), when coupling element (30) is attached to clamps (20) and the cable bundle (15), extends in the main radially outwards from the longitudinal axis of the cable bundle.

4. Pulling arrangement according to claim 73 **characterised in that** said friction reducing means (28) is a number of wheels (28) and said centre axis of the wheel (28) is embedded in the coupling elements (30).

5. Pulling arrangement (10) according to claim 1, **characterised in that** the arrangement (10) comprises three cables (12, 14, 16), and that the clamps (20) are adapted for receiving three cables (12, 14, 16) and that the arrangement (10) comprises three coupling elements (30).

6. Pulling arrangement (10) according to claim 5, **characterised in that** said clamp (20') has a triangular shape and comprises three contact surfaces (20a') that by constriction of the clamp (20) form an engagement with the three cables (12, 14, 16) of the cable bundle (15), and that said clamps (20 ') comprises three fastening means (20g) for attaching to each of the three coupling elements (30) of each clamp (20,20')

7. Pulling arrangement (10) according to one of claims 1 to 6, **characterised in that** the arrangement (10) comprises a load cell adapted to measure the forces which the cable bundle (15) is subjected to when being pulled through a borehole (11), or that the arrangement (10) comprises one or more accelerometers measuring acceleration in three planes, adapted to determine the position of the arrangement.

8. Pulling arrangement (10) according to claim 7, **characterised in that** when the position of the cable arrangement is measured continually when pulling through the borehole (11) then the information from the accelerometers will provide coordinates of the elongated extent of the borehole (11).

9. Pulling arrangement (10) according to one of claims 1 to 8, **characterised in that** the arrangement (10) comprises image recording means such as cameras, and lighting equipment such as a headlight adapted to take photographs and/or videos of the inner surface (11a) of the borehole (11), or the arrangement (10) comprises one or more fibre cables (29), and that these are used for transmitting signals from the arrangement (10) in the borehole (11) to a data processing unit outside of the borehole (11), preferably wherein said fibre cable transmits signals from a load unit, accelerometers, and/or image recording means.

10. Pulling arrangement according to claim 90-12, **characterised in that** said load unit, accelerometers, and/or image recording means are provided in said pull head (40).

11. Method for the pulling of a cable bundle (15) through an elongated borehole (11), wherein a number of cables (12, 14, 16) are bundled into a cable bundle (15) with a number of clamps (20), and that a number of coupling elements (30) are attached to said clamps (20) along the longitudinal length of the cable bundle (15), and that there is applied pulling forces in one of the end parts of the cable arrangement (10) in order to pull the cable bundle (15) through said borehole (11), wherein the arrangement (10) comprises a pulling head (40) that is attached to the coupling elements (30) for pulling the cable bundle (15) through the borehole (11), wherein the pulling forces that are applied are transmitted via the coupling elements (30) to the clamps (20) and to the cable bundle (15) for pulling the cable bundle (15) through the borehole (11), and wherein the friction between the arrangement (10) and the inner surface of the borehole (11) is reduced by a number of friction reducing means (28).

12. Method according to claim 11, **characterised in that** pulling forces that are applied to the arrangement (10) are also applied directly to the cable bundle (15).

13. Method according to one of claims 11-12, **characterised in that** the pulling forces via coupling elements (30) and clamps (20) are transferred to a number of contact points along the elongated length of the cable bundle (15).

14. Method according to one of claims 11-13, where a pulling head (40) is applied and this is attached to the coupling elements (30).

15. Method according to one of claims 11-14, **characterised in that** the arrangement (10) comprises a load cell and that the forces which the cable bundle (15) is subjected to when pulling through borehole (11) are measured, or that the arrangement (10) comprises one or more accelerometers and acceleration is measured in three planes, in order to determine the location of the arrangement or that the arrangement (10) comprises image recording means such as cameras, and lighting equipment such as a headlight in order to record images and/or videos of the inner surface (11a) of the borehole (11), or that the arrangement (10) comprises one or more fibre cables (29), and that they are used for transmitting signals from the arrangement (10) in the borehole (11) to a data processing unit on the outside of the borehole (11).

## Patentansprüche

1. Ziehanordnung (10) zum Ziehen von Kabeln (12, 14, 16) oder eines Kabelbündels (15) durch ein Bohrloch (11), umfassend:
- eine Anzahl von Klemmeinheiten (20), die an dem Kabelbündel (15) in verschiedenen Positionen in der Längsrichtung des Kabelbündels (15) befestigt sind,
- ein oder mehrere Kupplungselemente (30), die zwei oder mehrere Klemmeinheiten (20) in der Längsrichtung des Kabelbündels verbinden,
- so angeordnet, dass die Ziehkräfte, die verwendet werden, um die Kabelanordnung (10) durch das Bohrloch (11) zu ziehen, über das mindestens eine Kupplungselement (30) aufgebracht und über die Klemmen (20) auf das Kabelbündel (15) übertragen werden,
- einen Ziehkopf (40) zum Ziehen des Kabelbündels (15), wobei der Ziehkopf (40) eine Anzahl von Verriegelungsmitteln (42) umfasst, die an den Kupplungselementen (30) befestigbar sind und einen Eingriff mit diesen bilden,
- radial außerhalb der Kupplungselemente (30) und/oder an den Klemmen (20) befinden sich eine Anzahl von reibungsvermindernden Mitteln (28), um die Reibung zwischen der Ziehanordnung (10) und der Innenfläche (11a) des Bohrlochs (11) durch Ziehen durch das Bohrloch (11) zu verringern, und
- wobei die Klemme (20) Mittel (20a) zur Befestigung an dem Kabelbündel (15) und Befestigungsmittel (20b) zur Befestigung an den Kupplungselementen (30) umfasst.

2. Ziehanordnung nach Anspruch 1, **dadurch gekennzeichnet, dass** die Klemmen aus Öffnungen (20f) oder Ausschnitten (20e) zur Aufnahme der Kupplungseinheiten (30) bestehen, die in Bezug auf die Klemmen (20) quer angeordnet sind.

3. Ziehanordnung nach Anspruch 1, wobei die Kupplungselemente (30) reibungsvermindernde Mittel (28) umfassen, und wobei sich die Breite der Kupplungselemente (30), wenn das Kupplungselement (30) an Klemmen (20) und dem Kabelbündel (15) befestigt ist, im Wesentlichen von der Längsachse des Kabelbündels radial nach außen erstreckt.

4. Ziehanordnung nach Anspruch 73, **dadurch gekennzeichnet, dass** die reibungsvermindernde Mittel (28) aus einer Anzahl von Rädern (28) bestehen und die Mittelachse des Rades (28) in den Kupplungselementen (30) eingebettet ist.

5. Ziehanordnung (10) nach Anspruch 1, **dadurch gekennzeichnet, dass** die Anordnung (10) drei Kabel (12, 14, 16) umfasst, und dass die Klemmen (20) zum Aufnehmen von drei Kabeln (12, 14, 16) geeignet sind, und dass die Anordnung (10) drei Kupplungselemente (30) umfasst.

6. Ziehanordnung (10) nach Anspruch 5, **dadurch gekennzeichnet, dass** die Klemme (20') eine dreieckige Form aufweist und drei Kontaktflächen (20a') umfasst, die durch Einschnüren der Klemme (20) einen Eingriff mit den drei Kabeln (12, 14, 16) des Kabelbündels (15) bilden, und dass die Klemmen (20') drei Verriegelungsmittel (20g) zum Anbringen an jedem der drei Kupplungselemente (30) jeder Klemme (20, 20') umfassen.

7. Ziehanordnung (10) nach einem der Ansprüche 1 bis 6, **dadurch gekennzeichnet, dass** die Anordnung (10) eine Kraftmessdose umfasst, die geeignet ist, die Kräfte zu messen, denen das Kabelbündel (15) ausgesetzt ist, wenn es durch ein Bohrloch (11) gezogen wird, oder dass die Anordnung (10) einen oder mehrere Beschleunigungsmesser umfasst, die die Beschleunigung in drei Ebenen messen und geeignet sind, die Position der Anordnung zu bestimmen.

8. Ziehanordnung (10) nach Anspruch 7, **dadurch gekennzeichnet, dass**, wenn die Position der Kabelanordnung beim Ziehen durch das Bohrloch (11) kontinuierlich gemessen wird, die Informationen von den Beschleunigungsmessern Koordinaten der langgestreckten Ausdehnung des Bohrlochs (11) bereitstellen.

9. Ziehanordnung (10) nach einem der Ansprüche 1 bis 8, **dadurch gekennzeichnet, dass** die Anordnung (10) Bildaufzeichnungsmittel wie Kameras und Beleuchtungsausrüstung wie einen Scheinwerfer umfasst, die geeignet sind, Fotos und/oder Videos von der Innenfläche (11a) des Bohrlochs (11) aufzunehmen, oder die Anordnung (10) ein oder mehrere Fiberoptikkabel (29) umfasst, und dass diese zum Übertragen von Signalen von der Anordnung (10) in dem Bohrloch (11) zu einer Datenverarbeitungseinheit außerhalb des Bohrlochs (11) verwendet werden, wobei das Fiberoptikkabel vorzugsweise Signale von einer Lasteinheit, Beschleunigungsmessern und/oder Bildaufzeichnungsmitteln überträgt.

10. Ziehanordnung nach Anspruch 90-12, **dadurch gekennzeichnet, dass** die Lasteinheit, die Beschleunigungsmesser und/oder die Bildaufzeichnungsmittel in dem Ziehkopf (40) bereitgestellt sind.

11. Verfahren zum Ziehen eines Kabelbündels (15) durch ein langgestrecktes Bohrloch (11), wobei eine Anzahl von Kabeln (12, 14, 16) mit einer Anzahl von Klemmen (20) zu einem Kabelbündel (15) gebündelt werden, und dass eine Anzahl von Kupplungselementen (30) an den Klemmen (20) entlang der Länge des Kabelbündels (15) in Längsrichtung angebracht werden, und dass Ziehkräfte an einem der Endteile der Kabelanordnung (10) aufgebracht werden, um das Kabelbündel (15) durch das Bohrloch (11) zu ziehen, wobei die Anordnung (10) einen Ziehkopf (40) umfasst, der an den Kupplungselementen (30) angebracht ist, um das Kabelbündel (15) durch das Bohrloch (11) zu ziehen, wobei die aufgebrachten Ziehkräfte über die Kupplungselemente (30) auf die Klemmen (20) und auf das Kabelbündel (15) übertragen werden, um das Kabelbündel (15) durch das Bohrloch (11) zu ziehen, und wobei die Reibung zwischen der Anordnung (10) und der Innenfläche des Bohrlochs (11) durch eine Anzahl von reibungsvermindernden Mitteln (28) verringert wird.

12. Verfahren nach Anspruch 11, **dadurch gekennzeichnet, dass** Ziehkräfte, die auf die Anordnung (10) aufgebracht werden, auch direkt auf das Kabelbündel (15) aufgebracht werden.

13. Verfahren nach einem der Ansprüche 11 bis 12, **dadurch gekennzeichnet, dass** die Ziehkräfte über Kupplungselemente (30) und Klemmen (20) auf eine Anzahl von Kontaktpunkten entlang der langgestreckten Länge des Kabelbündels (15) übertragen werden.

14. Verfahren nach einem der Ansprüche 11 bis 13, wobei ein Ziehkopf (40) eingesetzt und dieser an den Kupplungselementen (30) befestigt wird.

15. Verfahren nach einem der Ansprüche 11 bis 14, **dadurch gekennzeichnet, dass** die Anordnung (10) eine Kraftmessdose umfasst und dass die Kräfte, denen das Kabelbündel (15) beim Ziehen durch das Bohrloch (11) ausgesetzt ist, gemessen werden, oder dass die Anordnung (10) einen oder mehrere Beschleunigungsmesser umfasst und die Beschleunigung in drei Ebenen gemessen wird, um den Ort der Anordnung zu bestimmen, oder dass die Anordnung (10) Bildaufzeichnungsmittel wie Kameras umfasst, und Beleuchtungsausrüstung, wie z.B. einen Scheinwerfer, um Bilder und/oder Videos von der Innenfläche (11a) des Bohrlochs (11) aufzuzeichnen, oder dass die Anordnung (10) ein oder mehrere Fiberoptikkabel (29) umfasst, und dass sie zur Übertragung von Signalen von der Anordnung (10) in dem Bohrloch (11) zu einer Datenverarbeitungseinheit an der Außenseite des Bohrlochs (11) verwendet werden.

## Revendications

1. Dispositif de traction (10) destiné à tirer des câbles (12, 14, 16) ou un faisceau de câbles (15) à travers un trou de forage (11), comprenant :
- un certain nombre de dispositifs de brides de serrage (20) fixés au faisceau de câbles (15) à divers emplacements dans la direction longitudinale du faisceau de câbles (15),
- un ou plusieurs éléments d'accouplement (30) qui relient deux dispositifs de brides de serrage (20) ou plus, dans la direction longitudinale du faisceau de câbles,
- agencé(s) de telle sorte que les forces de traction qui sont utilisées pour tirer le dispositif de câbles (10) à travers le trou de forage (11) soient appliquées via ledit au moins un élément d'accouplement (30) et soient transférées via lesdites brides de serrage (20) au faisceau de câbles (15),
- une tête de traction (40) destinée à tirer le faisceau de câbles (15), la tête de traction (40) comprenant un certain nombre de moyens de fixation (42) qui peuvent être fixés à et se solidariser avec lesdits éléments d'accouplement (30),
- radialement à l'extérieur desdits éléments d'accouplement (30) et / ou sur les brides de serrage (20) se trouvent un certain nombre de moyens de réduction de frottement (28) pour réduire le frottement entre le dispositif de traction (10) et la surface intérieure (11a) du trou de forage (11) en tirant à travers le trou de forage (11), et
- dans lequel ladite bride de serrage (20) comprend un moyen (20a) de fixation au faisceau de câbles (15) et un moyen de fixation (20b) pour la fixation aux éléments d'accouplement (30).

2. Dispositif de traction selon la revendication 1, **caractérisé en ce que** les brides de serrage sont constituées d'ouvertures (20f) ou de découpes (20e) pour recevoir les unités d'accouplement (30), placées transversalement par rapport aux brides de serrage (20).

3. Dispositif de traction selon la revendication 1, dans lequel les éléments d'accouplement (30) comprennent un moyen de réduction de frottement (28), et dans lequel la largeur des éléments d'accouplement (30), lorsqu'un élément d'accouplement (30) est fixé aux brides de serrage (20) et au faisceau de câbles (15), s'étend essentiellement radialement vers l'extérieur depuis l'axe longitudinal du faisceau de câbles.

4. Dispositif de traction selon la revendication 3, **caractérisé en ce que** ledit moyen de réduction de frottement (28) est un certain nombre de roues (28) et ledit axe central de la roue (28) est encastré dans les éléments d'accouplement (30).

5. Dispositif de traction (10) selon la revendication 1, **caractérisé en ce que** le dispositif (10) comprend trois câbles (12, 14, 16) et **en ce que** les brides de serrage (20) sont adaptées pour recevoir trois câbles (12, 14, 16) et **en ce que** le dispositif (10) comprend trois éléments d'accouplement (30).

6. Dispositif de traction (10) selon la revendication 5, **caractérisé en ce que** ladite bride serrage (20') a une forme triangulaire et comprend trois surfaces de contact (20a') qui, par rétrécissement de la bride de serrage (20), se solidarisent avec les trois câbles (12, 14, 16) du faisceau de câbles (15), et **en ce que** lesdites brides de serrage (20') comprennent trois moyens de fixation (20g) destinés à se fixer à chacun des trois éléments d'accouplement (30) de chaque bride de serrage (20, 20').

7. Dispositif de traction (10) selon l'une quelconque des revendications 1 à 6, **caractérisé en ce que** le dispositif (10) comprend une cellule de charge adaptée pour mesurer les forces auxquelles le faisceau de câbles (15) est soumis lorsqu'il est tiré à travers un trou de forage (11), ou **en ce que** le dispositif (10) comprend un ou plusieurs accéléromètres mesurant l'accélération sur trois plans, adaptés pour déterminer la position du dispositif.

8. Dispositif de traction (10) selon la revendication 7, **caractérisé en ce que** lorsque la position du dispositif de câbles est mesurée en continu lors du tirage à travers le trou de forage (11), alors les informations provenant des accéléromètres fourniront les coordonnées de la mesure allongée du trou de forage (11).

9. Dispositif de traction (10) selon l'une quelconque des revendications 1 à 8, **caractérisé en ce que** le dispositif (10) comprend un moyen d'enregistrement d'image tel qu'une caméra, et un équipement d'éclairage tel qu'un projecteur adapté pour prendre des photos et / ou des vidéos de la surface intérieure (11a) du trou de forage (11), ou le dispositif (10) comprend un ou plusieurs câbles à fibres (29), et ceux-ci sont utilisés pour transmettre des signaux en provenance du dispositif (10) dans le trou de forage (11) à une unité de traitement de données à l'extérieur du trou de forage (11), de préférence dans lequel ledit câble à fibre transmet des signaux en provenance d'une unité de charge, d'accéléromètres et / ou d'un moyen d'enregistrement d'image.

10. Dispositif de traction selon les revendications 9 à 12, **caractérisé en ce que** ladite unité de charge, les accéléromètres et / ou le moyen d'enregistrement d'image sont prévus dans ladite tête de traction (40).

11. Procédé de traction d'un faisceau de câbles (15) à travers un trou de forage allongé (11), dans lequel un certain nombre de câbles (12, 14, 16) sont mis en faisceau dans un faisceau de câbles (15) avec un certain nombre de brides de serrage (20), et en ce qu'un certain nombre d'éléments d'accouplement (30) sont fixés auxdites brides de serrage (20) le long de la longueur longitudinale du faisceau de câbles (15), et en ce que des forces de traction sont appliquées dans l'une des parties d'extrémité du dispositif de câbles (10) afin de tirer le faisceau de câbles (15) à travers ledit trou de forage (11), dans lequel le dispositif (10) comprend une tête de traction (40) qui est fixée aux éléments d'accouplement (30) pour tirer le faisceau de câbles (15) à travers le trou de forage (11), dans lequel les forces de traction qui sont appliquées sont transmises via les éléments d'accouplement (30) aux brides de serrage (20) et au faisceau de câbles (15) pour tirer le faisceau de câbles (15) à travers le trou de forage (11), et dans lequel le frottement entre le dispositif (10) et la surface intérieure du trou de forage (11) est réduit par un certain nombre de moyens de réduction du frottement (28).

12. Procédé selon la revendication 11, **caractérisé en ce que** les forces de traction appliquées au dispositif (10) sont également appliquées directement au faisceau de câbles (15).

13. Procédé selon l'une des revendications 11 à 12, **caractérisé en ce que** les forces de traction via les éléments d'accouplement (30) et les brides de serrage (20) sont transférées à un certain nombre de points de contact sur la longueur allongée du faisceau de câbles (15).

14. Procédé selon l'une des revendications 11 à 13, dans lequel une tête de traction (40) est appliquée et celle-ci est fixée aux éléments d'accouplement (30).

15. Procédé selon l'une des revendications 11 à 14, **caractérisé en ce que** le dispositif (10) comprend une cellule de charge et **en ce que** les forces auxquelles le faisceau de câbles (15) est soumis lors du tirage à travers le trou de forage (11) sont mesurées, ou **en ce que** le dispositif (10) comprend un ou plusieurs accéléromètres et l'accélération est mesurée sur trois plans, afin de déterminer la localisation du dispositif ou **en ce que** le dispositif (10) comprend un moyen d'enregistrement d'image tel qu'une caméra, et un équipement d'éclairage tel qu'un projecteur afin d'enregistrer des images et / ou des vidéos de la surface intérieure (11a) du trou de forage (11), ou **en ce que** le dispositif (10) comprend un ou plusieurs câbles à fibres (29), et ceux-ci sont utilisés pour transmettre des signaux en provenance du dispositif (10) dans le trou de forage (11) à une unité de traitement de données à l'extérieur du trou de forage (11).
